# EUROPEAN PATENT APPLICATION

(11) **EP 4 488 896 A1**
(43) Date of publication of application: **08.01.2025**
(21) Application number: 23183470.6
(22) Date of filing: 04.07.2023
(51) Int. Cl.: G06Q 10/04, G06Q 10/063

(54) **METHOD AND SYSTEM FOR OPTIMIZING AN ENERGY USAGE AND/OR A CARBON FOOTPRINT FOR AN URBAN AREA**

(71) Applicant: Theodoridou, Ifigeneia, 55131 Thessaloniki (GR)
(72) Inventor: Theodoridou, Ifigeneia, 55131 Thessaloniki (GR)
(74) Representative: Kouzelis, Dimitrios

(57) **Abstract**

The invention concerns a method (100) for optimizing an energy usage and/or a carbon footprint for an urban area. The method comprises the steps of receiving (101) map information that is related to the urban area and receiving (104) multiple sets of second building attributes from a building database for each building of the multiple buildings, wherein each set of second building attributes defines a number of building attributes that lead to an impact on an energy performance of a building. The received sets of the building attributes are assigned to the corresponding buildings of the multiple buildings that are located in the urban area and a dynamic first energy simulation is performed for the multiple buildings based on the first building attributes and a result of the first energy simulation is provided (107).

## Description

### Technical Field

The invention concerns a method and a system for optimizing an energy usage and/or a carbon footprint for an urban area.

### Background

Tools for performing energy simulations are known in the art. These tools allow to simulate an energy usage of one or more buildings. For example, the following tools are known in the art: CitySim, SimStadt, UMI - Urban modelling interface, CityBES - City Building Energy Saver, CEA - City Energy Analyst, TEASER - Tool for Energy Analysis and Simulation for Efficient Retrofit, URBANopt, OpenIdeas, UBEM and DECoRuM.

Typically, tools for simulating an energy usage of one or more buildings require efforts to enter all necessary data for the simulation, which limits the usage of tools for energy simulation to experienced users.

### Summary

A method for optimizing an energy usage and/or a carbon footprint for an urban area comprises the steps of receiving map information that is related to the urban area, wherein the map information comprises first building attributes of each building of multiple buildings in the urban area, wherein the first building attributes comprises the footprint and the location of the corresponding building in the urban area; receiving a set of second building attributes from a building database for each building of the multiple buildings, wherein the each set of second building attributes defines a number of building attributes that lead to an impact on an energy performance of a building; assigning the received sets of the building attributes to the corresponding buildings of the multiple buildings that are located in the urban area; performing a dynamic first energy simulation for the multiple buildings based on the first building attributes and the second building attributes that are assigned to the multiple buildings, wherein the energy simulation comprises a calculation of an expected energy usage and/or a carbon footprint of each building of the multiple buildings; and providing an information that is indicating the expected energy usage and/or a carbon footprint of each building of the multiple buildings, the expected energy usage of a group of buildings of the multiple buildings and/or a carbon footprint of a group of buildings of the multiple buildings according to the first energy simulation, and/or a total expected energy usage and/or a total carbon footprint of all buildings of the multiple buildings according to the first energy simulation.

A system for optimizing an energy usage for an urban area according to the invention is configured to receive map information that is related to the urban area, wherein the map information comprises first building attributes of each building of multiple buildings in the urban area, wherein the first building attributes comprises a footprint and a location of the corresponding building in the urban area; receive a set of second building attributes from a building database for each building of the multiple buildings, wherein the each set of second building attributes defines a number of building attributes that lead to an impact on an energy performance of a building; assign the received sets of the building attributes to the corresponding buildings of the multiple buildings that are located in the urban area; perform a dynamic first energy simulation for the multiple buildings based on the first building attributes and the second building attributes that are assigned to the multiple buildings, wherein the energy simulation comprises a calculation of an expected energy usage of each building of the multiple buildings; and provide an information that is indicating the expected energy usage of each building of the multiple buildings and/or a carbon footprint of each building of the multiple buildings according to the first energy simulation, the expected energy usage of a group of buildings of the multiple buildings and/or a carbon footprint of a group of buildings of the multiple buildings according to the first energy simulation, and/or a total expected energy usage and/or a total carbon footprint of all buildings of the multiple buildings according to the first energy simulation.

The method is preferably performed by a system according to the invention, preferably by a server system, wherein the map information and/or the set of second building attributes is received locally from the server system or from one or more further servers via network communication. Information in respect to the urban area of interest is preferably provided to the server system by a client device via network, in particular via internet connection. That is, the server is receiving a user selection that defines the urban area and the map information and the sets of second building attributes that corresponds to the selected area is received in response to the selection. The information that is indicating the expected energy usage of each building of the multiple buildings and/or the carbon footprint of each building of the multiple buildings, the expected energy usage of a group of buildings of the multiple buildings and/or a carbon footprint of a group of buildings of the multiple buildings according to the first energy simulation, and/or is indicating the total expected energy usage and/or carbon footprint of all buildings of the multiple buildings is preferably provided to the client device. That is, a cloud-based system can be provided and can be used for optimizing an energy usage and/or a carbon footprint for an urban area.

Map information that is related to the urban area is received, wherein the map information comprises first building attributes of each building of multiple buildings in the urban area, wherein the first building attributes comprises the footprint and the location of the corresponding building in the urban area. Preferably, the first building attributes further comprise information regarding the orientation of each building, for example by defining a vector for each one of the footprints. Therefore, a positional relationship of the buildings in the urban area is defined. This allows to calculate effects that lead to an influence of one building on the energy performance of another building in the first energy simulation.

Preferably, the map information further comprises geo-related information. That is, the map information can comprise information that is related to any other human made or natural objects that are present in the urban area. For example, information in regards to trees might be included in the map information. Preferably, the first building attributes further comprise an age of a corresponding building, a usage of a corresponding building and/or a geometric attribute of a corresponding building. The geometric attribute is in particular a height of a corresponding building.

The map information is an information that is indicating characteristics of buildings that are acquired for individual buildings. The map information is preferably received from a map database.

A set of second building attributes is received from a building database for each building of the multiple buildings, wherein each set of second building attributes defines a number of building attributes that lead to an impact on an energy performance of a building. That is, the second building attributes define characteristics that can be assigned to the buildings that are present in the urban area, wherein the map information is indicating whether the buildings are in the urban area. Preferably, the second building attributes define characteristics of a corresponding building that are suitable to more precisely calculate an energy usage and/or a carbon footprint of a building when combined with the first building characteristics. Contrary to the first building attributes, the second building attributes are not necessarily indicating characteristics of buildings that are acquired for individual buildings but can be information that is likely to be correct for individual buildings or groups of buildings. For example, the second building attributes might be an envelope of a building. In this example, based on the fact that a building is located in a rural area, a building envelope that is typical for rural areas but not for industrial areas is assigned to the buildings in this area. Therefore, the second building attributes in the set of second building attributes can optionally be an information that is indicating characteristics of buildings that are acquired for groups of buildings. The second building attributes define information that is not available in the map information and allow to increase the amount of relevant information to perform an energy simulation. Depending on the techniques that are applied for the first energy simulation, the set of second building attributes comprises such information that are additionally required to the map information for performing the first energy simulation.

Preferably, an update process is performed in which information in the building database is updated based on external sources, wherein specific second building attributes in the building database are replaced by corresponding and more actual or accurate information from the external sources. For example, a building usage profile might be a second building attribute. The building usage profiles of buildings for specific areas can be available in a public or private database. The building usage profiles can be available in different data formats, for example is excel, csv or json files, or provided by APIs. The sources for the building usage profiles can be public or private, often requiring a registration. For quick data access, it is preferable, to copy the information to the building database, wherein the information is preferably converted into a pre-defined data format that is stored in the building database and can be used by the simulation engine that is performing the energy simulation. The building database can be partitioned in multiple databases that are maintained on the same or on different servers. Preferably, the building database is stored on the same server system that is performing the method for optimizing an energy usage and/or a carbon footprint for an urban area. That is, the building database can be accessed via local network or server internally for the first energy simulation.

As the first energy simulation is performed for multiple buildings of the urban area, wherein the number of buildings can be very high, the required calculation power is increasing over a energy simulation of a single building. Therefore, it is necessary to have the required information for the first energy simulation, that is the first and the second building attributes, available with quick access. Therefore, it is preferable to set up dedicated databases, this is the building database and preferably the map database, to store the information that has to be potential acquired from various sources.

A first energy simulation for the multiple buildings is performed based on the first building attributes and the second building attributes that are assigned to the multiple buildings, wherein the energy simulation comprises a calculation of an expected energy usage and/or a carbon footprint of each building of the multiple buildings. Within the first energy simulation, an impact of different buildings in the urban area on each other is calculated. In particular, an impact of one building on the energy usage and/or carbon footprint of one or more neighbouring buildings is determined. Preferably, also an impact of any object that is defined by the geo-related information on the energy usage and/or carbon footprint of each building is determined. The information regards the orientation of each building and its surrounding built environment allow to correctly simulate shading effects and solar gains for the multiple buildings.

In the field of energy simulations, a steady state simulation refers to a system that does not change its state without external excitation. Contrary to this, the first energy simulation is preferably a dynamic energy simulation. A dynamic simulation calculates the time course of state variables starting from a given initial value. In addition, a value for the state variables at the time t=0 must be given. Simple differential equations can be solved analytically. This is why more complex systems can only be modelled with dynamic energy simulation for example passive cooling and heating systems (sunrooms, trombe-walls) or detailed air movement, or automation (i.e. lighting systems that dims when the daylight is enough).

A Steady-State Building Energy Simulation comprises the following characteristics:
- Time frame: In a steady-state simulation, the analysis is conducted over a specific point in time, typically an annual or monthly average. It assumes that the building's thermal conditions remain constant throughout the simulation period.
- Simplified representation: Steady-state simulations assume a simplified representation of the building's energy systems. The calculations typically consider the average heat transfer through the building envelope, assuming constant internal loads and HVAC system operation.
- Calculation speed: Due to their simplified nature, steady-state simulations are computationally faster compared to dynamic simulations.
- Applicability: Steady-state simulations are often used for preliminary design studies, quick energy audits, or comparing energy-saving measures at a high level. They provide a rough estimate of the building's energy performance but may not capture transient effects and time-dependent interactions accurately.

Contrary to this, a dynamic Building Energy Simulation, which is used as the first energy simulation preferably comprises the following characteristics:
- Time resolution: Dynamic simulations model the building's energy performance in a highly time-resolved manner, typically with an hourly or shorter time step. This allows for capturing the temporal variations in weather conditions, occupant behavior, and HVAC system operation.
- Detailed representation: Dynamic simulations incorporate a more detailed representation of the building's components and systems, such as the building envelope, internal thermal mass, HVAC systems, controls, and interactions between them. They can account for factors like thermal lag, system cycling, and the impact of dynamic loads.
- Accuracy: Dynamic simulations provide a more accurate assessment of a building's energy performance by considering transient effects, time-dependent interactions, and the influence of varying external and internal conditions.
- Applications: Dynamic simulations are commonly used for in-depth energy analysis, building code compliance, performance optimization, and evaluating the impact of energy conservation measures. They enable a comprehensive understanding of the building's energy dynamics, including peak loads, energy consumption patterns, and system interactions.

In summary, steady-state simulations provide a simplified, time-averaged estimation of building energy performance, suitable for quick assessments. Dynamic simulations offer a more detailed and accurate analysis by considering time-dependent factors, making them ideal for comprehensive evaluations and detailed design optimization. The first energy simulation is a dynamic energy simulation. In the dynamic energy simulation, intermediate expected energy usages and/or intermediate carbon footprint of each building of the multiple buildings are calculated for pre-defined time intervals. For example, an intermediate expected energy usage and/or an intermediate carbon footprint is calculated for a pre-defined time interval of one hour or less, for example in 10 Minute steps. In one example, it is calculated for each hour of the day, what energy usage is to be expected for each building of the multiple buildings or it is calculated for each hour of the day what carbon footprint is caused by each building of the multiple buildings. The intermediate expected energy usages and/or intermediate carbon footprint of each building of the multiple buildings are combined to generate the expected energy usages and/or carbon footprint of the multiple buildings. Intermediate expected energy usages and/or intermediate carbon footprint of subsequent time-intervals are dependent on each other. For example, the calculation of the intermediate expected energy usages and/or intermediate carbon footprint of a building comprises the calculation of a thermal situation of a building. The thermal situation of the building builds upon the previous one. For example, if on August the 4th the temperatures outside lead to an overheating inside the building, on August the 5th the building will be simulated based on that leading to much different cooling demands (much higher) than with a steady state simulation tool.
this is what makes the results more concrete and detailed. The pre-defined time intervals are preferable time intervals that are smaller than 24 hours. Preferably, the number of pre-defined time intervals that are used to generate the expected energy usages and/or carbon footprint of the multiple buildings sum up to one year.

An energy simulation that is known in the art can be used for performing the first energy simulation. In this case, the method comprises a merging of the first building attributes and the sets of second building attributes that have been received for all buildings into a data format that is accepted as an input for the energy simulation.

Once the first energy simulation is completed, an information that is indicating the expected energy usage of each building of the multiple buildings and/or a carbon footprint of each building of the multiple buildings is provided. In addition or in the alternative, an information that is indicating a total expected energy usage and/or a carbon footprint of all buildings of the multiple buildings is provided. Thus, the provided information can be either provided in a way to separately provide information for all buildings in the urban area or to provide general information that relates to a combination of all buildings in the urban area. In both cases, the provided information is a result of the first energy simulation.

In case that a total expected energy usage of all buildings of the multiple buildings is to be indicated, the total expected energy usage is calculated by adding the expected energy usage of all buildings in the urban area. In case that a total carbon footprint of all buildings of the multiple buildings is to be indicated, the total carbon footprint is calculated by adding the carbon footprint of all buildings in the urban area.

The multiple buildings in the urban area are not necessarily all buildings but can be a selection of buildings of the urban area. Therefore, the results of the first energy simulation can also refer group of buildings, for example to buildings of a certain category, for example to buildings constructed in a certain time range, only school buildings, or only residential buildings.

The system is preferably able to calculate the costs of retrofitting scenarios, offering a preliminary assessment of the necessary investment to achieve a specific energy usage or carbon footprint.

The dependent claims define preferable features of the invention.

The method preferably comprises the step of receiving a user selection that defines the urban area, wherein the map information and the set of second building attributes that correspond to the user selection is received. Thus, the method can be triggered by a simple user selection.

Preferably, the method comprises a step of acquiring the map information, wherein the map information is based on the urban area in reality to reflect the footprints of multiple buildings of the urban area in reality. The acquiring of the map information preferably comprises a step of analysing sensor data, for example image data, to identify the footprints of the multiple buildings and/or the location of the multiple buildings.

Preferably, the method comprises a step of acquiring the second building attributes for the building database, wherein the second building attributes are based on corresponding attributes of real buildings in the urban area in reality. The acquiring of the second building attributes preferably comprises a step of acquiring information from system external databases and analysing the acquired information to identify second building attributes.

Preferably, the method comprise a step of generating a 3D model of the urban area, wherein each building is generated to have the footprint that is indicated for the respective building in the first building attributes, and wherein each building is generated to have a height that is set according to a height value that is provided in the first building attributes for the respective building, wherein each building is generated to have a characteristic that is defined in the set of second building attributes that is assigned to the respective building, wherein the first energy simulation comprises a calculation of the expected energy usage and/or a carbon footprint of each building of the multiple buildings for the structures that are given for the buildings in the 3D model. The 3D model is not necessarily a graphic model but can be a mathematical definition of 3D structures. The second building attributes preferably define an information that is related to the shape of the building. Accordingly, a building can be generated in the 3D model that has a specific footprint and height, as defined in the first building attributes, and can be further shaped in more detail according to the second building attributes. For example, the second building attributes define the type of building, a roof shape of the buildings or the building's window to wall ratio. Based on this information, the shape of the individual buildings in the 3D model can be set. That is, if the building type is set to "office building", a shape that is typical for office buildings in the specific urban area and country of the urban area can be used for modelling the respective building in the 3D model. In a different example, if the second building attribute is a roof shape and is indicating that a building has a pitched roof, the corresponding building can be modelled to have a shape with a pitched roof in the 3D model. The generation of the 3D model allows a further consideration of a geometric relation in between the buildings in the urban area. In particular, the first energy simulation is utilizing the 3D model to determine a shadowing that is caused for any building of the urban area caused by any other one of the buildings of the urban area. Such shadowing has an impact on the energy performance and the carbon footprint of the building that is affected.

Preferably, the method comprises the steps of receiving a definition of a regional location of the urban area and receiving climate information that is related to the regional location, wherein the climate information comprises a definition of a solar orbit, wherein the first energy simulation comprises a calculation of shadowed areas in the generated 3D model of the urban area, wherein the shaded areas are areas of buildings that are in the shade of a different building according to the solar orbit. The definition of the regional location can be the same information that is used for selecting the urban area and that is used to select the corresponding map information for the urban area. The climate information and the regional location allows to calculate the energy usage and/or the carbon footprint for an urban area more precisely.

Preferably, the method comprises the steps of receiving a definition of a regional location of the urban area, receiving climate information that is related to the regional location, wherein the climate information comprises a definition of a whether characteristic, wherein the weather characteristics define weather parameters that describe weather conditions, wherein the first energy simulation comprises a calculation of the expected energy usage and/or a carbon footprint of each building of the multiple buildings based on the weather parameters. The climate information is preferably stored in weather files, wherein a corresponding file is selected according to the defined regional location. Besides the sun path, the weather file for each area under study is deriving from the regional location. The system has a database of all available weather files for cities or regions. These weather files are suitable in order to perform the energy simulation properly.

Preferably, the first building attributes or the second building attributes comprise a definition of a construction year and/or a building usage type. This information allows to calculate the energy usage and/or the carbon footprint for an urban area more precisely. The building usage type defines how a building is used, for example by defining its operational profile (internal gains, ventilation etc.).

Preferably, the method comprises the steps of receiving the second building attributes for a building from the building database based on a construction year, a country in which the urban area is located and/or the building usage type that is defined for this building in the map data, wherein the second building attributes comprise regional information, wherein the regional information comprises information about building materials that are typically used for construction of a building in the construction year and/or are typically used for construction of a building of the building usage type, a usage profile for a building, wherein the usage profile defines typical usage characteristics for a building in the construction year and/or defines typical usage characteristics for a building of the building usage type, internal gains and ventilation profiles that typically apply for a building of the building usage type and/or the building usage type, and/or an envelope information, wherein the envelope information defines a building envelope of a building that typically applies, and performing the first energy simulation based on the regional information. The regional information is preferably an information that is not necessarily correct for a specific building but has a certain probability to be correct. For example, buildings that have been built in a same time period typically also have been build using the same materials and construction techniques. Also the same standards for building had to be applied in the same construction year and/or for same building usage types. Therefore, the construction year and the building usage type provide information in respect to the characteristics of a building and can be used to improve the first energy simulation.

The second building attributes preferably comprise a usage profile, wherein the usage profile defines a characteristic that describes a usage of a building, an envelope information, wherein the envelope information defines a building envelope of a building, an energy profile, wherein the energy profile defines an energy usage of a building and/or a system profile, wherein the system profile defines the electronic and mechanical systems that are provided in a building.

Preferably, the set of second building attributes is assigned to the respective building of the multiple buildings based on the first set of building attributes. In particular, the footprint or the location of a building allow to identify further characteristics of a building. For example, considering that the second building attribute is a building type, it can be derived from the location of a building in a commercial area that the building type is a commercial building. In this case, the second building attributes might be typical attributes for commercial buildings based on each country's technical directives and/or databases for typical buildings (archetype buildings).

Preferably, the method comprises the steps of performing a second energy simulation based on the first building attributes of the multiple buildings and the sets of second building attributes that are assigned to the multiple buildings, wherein the second energy simulation comprises a calculation of an expected energy usage and/or a carbon footprint of each building of the multiple buildings under consideration of an energy upgrade measure, and providing an information that is indicating the expected energy usage of each building of the multiple buildings and/or a carbon footprint of each building of the multiple buildings according to the second energy simulation, and/or a total expected energy usage and/or a total carbon footprint of all buildings of the multiple buildings according to the second energy simulation. Thus, by performing the second energy simulation, the effects of energy upgrade measure can be determined, as the indicated result of the second energy simulation can be compared to the results of the first energy simulation. The energy upgrade measures can be applied by modifying the second building attributes according to the energy upgrade measure. The second energy simulation is preferably a dynamic energy simulation.

Preferably, the method comprises the steps of performing multiple second energy simulations based on the first building attributes of the multiple buildings and the sets of second building attributes that are assigned to the multiple buildings, wherein each of the second energy simulation comprises a calculation of an expected energy usage and/or a carbon footprint of each building of the multiple buildings under consideration of an energy upgrade measure, wherein different energy upgrade measures are applied for the second energy simulations, wherein the total expected energy usage and/or total carbon footprint of all buildings of the multiple buildings is calculated according to the first energy simulation and according to each one of the second energy simulations, and providing the energy upgrade measure that corresponds to the energy simulation that led to the smallest total expected energy usage of all buildings of the multiple buildings. That is, the effects of multiple different energy upgrade measures can be tested, which allows a selection of a most efficient energy upgrade measure, which can then be applied to the buildings in the urban area.

### Brief description of the drawings

- Figure 1: shows a flowchart of a method according to the invention,
- Figure 2: shows a step by step construction of a building in a 3D model according to the invention,
- Figure 3: shows a structure of a data management for a system according to the invention,
- Figure 4: shows a system according to the invention, and
- Figure 5: shows a flowchart of a process for adding data to the building database.

### Detailed description

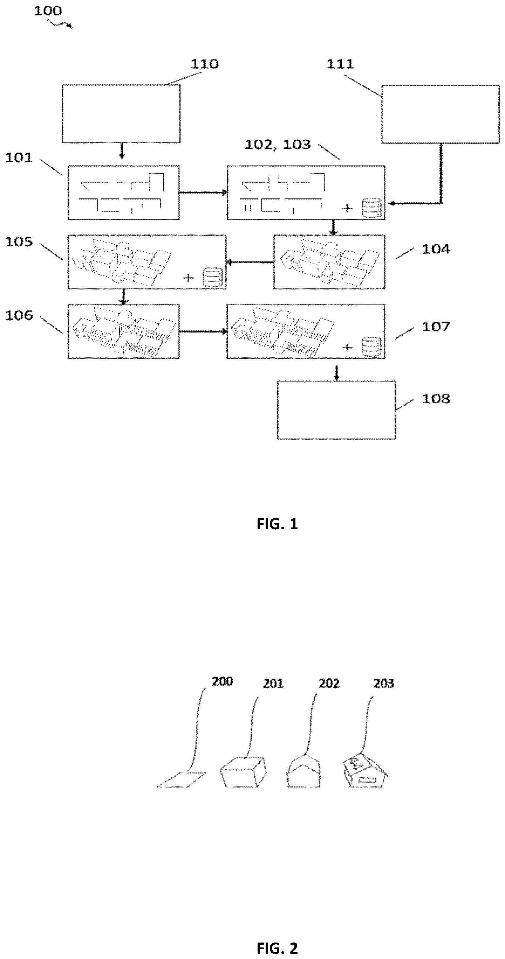

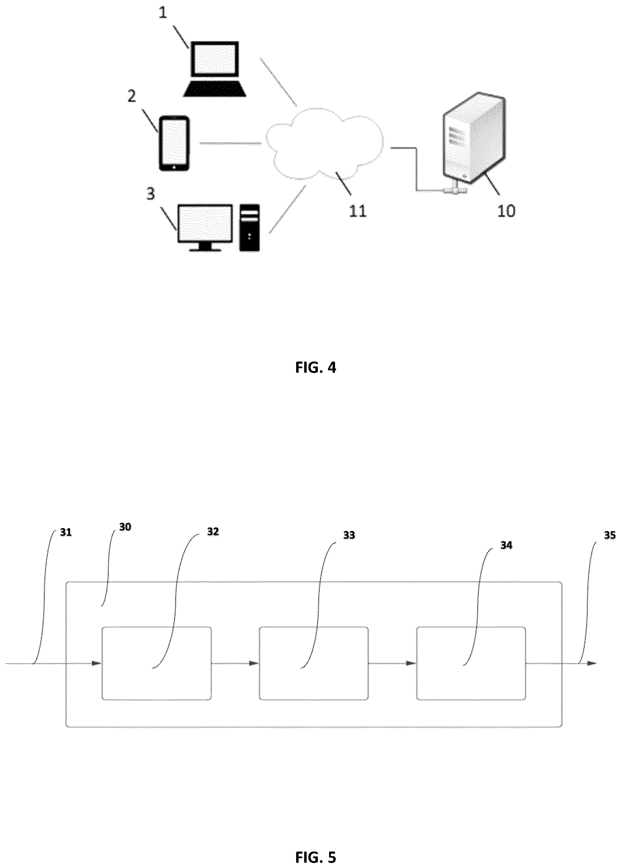

Figure 1 shows a flowchart of a method 100 for optimizing an energy usage and/or a carbon footprint for an urban area according to the invention. The method is performed by a system 10 according to the invention, which is illustrated in Figure 4. The system 10 is a server system that is available for client computers 1, 2, 3 via an internet connection 11.

The method 100 is initiated by a request that is provided to the system 10 from one of the client computers 1, 2, 3, for example from a first client computer 1. Such a request comprises a user selection that defines an urban area. For example, the urban area is defined by a selection on a map by a user on the first client computers 1. The request is transmitted from the first client computer 1 to the system 10 via the internet connection 11. The system 10 is performing an initial step 200 in which the system 10 is receiving the user selection that defines the urban area.

In reaction to receiving the request, the system 10 is performing a first step 101 in which a map information is received that is related to the urban area that has been defined by the user selection. The map information comprises first building attributes of each building of multiple buildings in the urban area, wherein the first building attributes comprises the footprint and the location of the corresponding building in the urban area. The system 10 is receiving the map information from a map database 20. Figure 1 is depicting multiple footprints of multiple buildings of the urban area and their relative position with respect to each other. The footprint of a single building as available at this step of the method 100 is also depicted in Figure 2. That is, for every building in the urban area a building model with a first level of detail 201, LOD0, also named Level of Detail Zero, or 0 is generated.

The system 10 works with the minimum possible information regarding the generation of the building's morphology (3D object) which is the LOD0, thus a simple building footprint. This allows to perform the method 100, even if there are no big maps of cities including information of a fourth level of detail 203, LOD3, and onwards (i.e. inclusive of all façade details and 3D shape of the building). So, the system 10 solves the problem/barrier that has to do with missing data input. In addition, the system 10 can be able to also use integrated data files (LOD3 and higher), such as CityGML data files and BIM files. In this case, the system 10 receives the 3D shape from the LOD3 map and crosschecks the included LOD3 attributes of the 1^{st} set and adds missing information -if needed- from the 2^{nd} set. Since for large urban environments, there are often no known maps with the fourth level of detail 204, LOD3, information for all building units, the use of the process with the first level of detail 201, LOD0, is inevitable but could be enhanced with detailed information directly from CityGML files or BIM files for single building units. A key point is that some CityGML files refer to a third level of detail 203, LOD2, only, thus a simple 3D (building volume) with no I information. Another possible source file are the .osm (OpenStreetMap buildings). The system 10 can create footprints from all of these data files (reverse process) as described initially.

The map information optionally comprises further first building attributes, which are available in the map database 20 for each of the buildings in the urban area. For example, the first building attributes further comprise a height value that is indicating a height of the corresponding building that has this first building attribute assigned. Further than that, the first building attributes further comprise a construction year and a building usage type. The construction year defines a year in which a building was constructed. The building usage type defines how a building is used, for example by defining the operational profile of a building, such as its lighting, ventilation, occupancy profile, etc. individual thermal zones that compose the building. In the outcome corresponding first building attributes are linked to each building of the urban area.

The consideration of the building usage type preferably allows to analyse the whole height of the building into a specific number of floors, based on the year of construction and the national building archetypes. Then, for example, a thermal zone per floor is created to increase the accuracy of the results. This is advantageous in the case of mixed-use buildings, i.e. commercial use for the ground floor and residential uses for the upper floors.

Therefore, the first step 101 comprises a processing of cartographic data. This includes a processing of building footprints. Buildings get isolated and analysed on the map.

Optionally, the method 100 comprises a first supportive step 110 of acquiring the map information, wherein the map information is based on the urban area in reality to reflect the footprints of multiple buildings of the urban area in reality. This step optionally comprises an analysis of available maps or pictures of urban regions to extract the first building attributes.

In a second step 102 of the method 100 the generation of a 3D model is initiated, wherein each building is generated to have the footprint that is indicated for the respective building in the first building attributes. Each building is generated to have a height that is set according to the height value that is provided in the first building attributes for the respective building. As the map information might not be sufficient to generate a detailed model of the urban area, a level of detail of the 3D model is limited at this point. Nevertheless, basic 3D structures can already be provided as the map information comprises basic geometric information by defining the footprint and the height of each building. Therefore, the buildings are generated for the 3D model having the second level of detail 201 or LOD1, which is also depicted by example depicted in Figure 2. In the second step 102, each of the building footprints holds attributes, like the usage of the building and the year of construction and 3D buildings are created on the map with specific geometric attributes according to the second level of detail 201, named LOD1.

In a third step 103 and a fourth step 104 of the method 100, a set of second building attributes is received from a building database and the received sets of the building attributes are assigned to corresponding buildings of the multiple buildings that are located in the urban area. One set of second building attributes is assigned to each building of the urban area.

Each set of second building attributes defines a number of building attributes that lead to an impact on an energy performance of a building. In this embodiment, the second building attributes comprise a usage profile, envelope information, an energy profile and a system profile.

The usage profile defines a characteristic that describes a usage of a building. A building's usage profile, also referred to as operational profile, includes its ventilation profile, internal thermal gains (from people, lighting and appliances), its operational schedule (electrical/mechanical systems, lighting, etc), and so on. Optionally, multiple usage profiles that are assigned to different floors of a building are assigned to the buildings of the urban area.

The envelope information defines a building envelope of a building. For example, the envelope information defines a roof type or a number, dimensions, and position of the openings (windows, glassed doors and doors) of a building. A building's envelope greatly influences its energy behaviour, as it defines its energy losses as well as their passive solar gains.

The energy profile defines an energy usage of a building. For example, the energy profile defines how much energy is generated or used by a building. Also, the energy profile defines energy loads that typically apply for a building.

The system profile defines the electronic and mechanic systems that are provided in a building. This is advantageous, as a building's electro-mechanical systems influence a number of significant parameters, such as its energy performance, thermal comfort, energy consumption, as well as its carbon footprint. The electro-mechanical systems are in particular Heating Ventilation and AirConditioning systems, also referred to as HVAC.

Optionally, the method 100 comprises a second supportive step 111 of acquiring second building attributes for the building database, wherein the second building attributes are based on corresponding attributes of single buildings or groups of real buildings in the urban area in reality. For example, a query to relevant databases is performed to acquire the second building attributes.

The building database comprises multiple possible second building attributes. Thus, the sets of second building attributes should be assigned to the buildings of the urban area in a way to most likely correctly define the characteristics of the real buildings. One possible way of assigning the sets of second building attributes to the respective buildings is by referring to the first building attributes of each building and to assign the set of second building attributes to the respective building of the multiple buildings based on the first set of building attributes. If a LOD3 or LOD4 map file or a BIM file is available, for example in the map database, then the information can derive directly from the maps.

For example, the construction year is a first building attribute that is assigned to each one of the buildings of the multiple buildings. Based on the construction year, it can be derived, which building materials have been typically used for construction of a building in the construction year. Thus, considering that the building materials are defined in the second building attributes, the second building attributes can be selected and assigned based on the construction year. Based on the construction year, the usage profile for the building can be selected and assigned, wherein the selected usage profile defines typical usage characteristics for a building in the construction year. In the same way, internal gains and ventilation profiles that typically apply for a building of the building usage type and/or the building usage type can be selected. Also, an envelope information can be selected this way, wherein the envelope information defines a building envelope of a building that typically applies.

The same way, the first building attributes can define a building usage type. The building usage type defines how a building is used. Also, from the characteristic use of a building it can be derived which building materials have been typically used for the building, which usage profile applies for a building or which energy profile applies for a building.

To allow a selection of the correct set of second building attributes based on the first building attributes, it is preferable when the building database defines specific ranges of first building attributes that are linked to different sets of second building attributes. Once the first building attributes have been received for a building, the set of second building attributes is received for this building.

A set second building attributes is assigned to each building of the urban area. As the set second building attributes typically comprises information that is indicating a characteristic of the corresponding building that allows a more precise modelling of this building in the 3D model of the urban area, the sets of second building attributes that are assigned to the buildings of the urban area are used to increase a detail level of the 3D model. For example, the envelope information, which is comprised by the set of second building attributes, is used for modelling the roof type to increase the level of detail from the second level of detail 201 (LOD1) to the third level of detail 202 (LOD2), as depicted by example in Figure 2. Further than that, the envelope information can be used for modelling the windows of a building to increase the level of detail from the third level of detail 202 (LOD2) to the fourth level of detail 203 (LOD3), as depicted by example in Figure 2. It can be seen that this use of the second building attributes allows to generate each building in a way to have a characteristic that is defined in the set of second building attributes that is assigned to the respective building. It is noted that not necessarily all second building attributes that are assigned to a building in the corresponding set of building attributes are used for generating the 3D model.

In a fifth step 105 of the method 100, a dynamic first energy simulation is performed for the multiple buildings based on the first building attributes and the second building attributes that are assigned to the multiple buildings. The first energy simulation comprises a calculation of an expected energy usage and/or a carbon footprint of each building of the multiple buildings. The first energy simulation comprises a calculation of the expected energy usage and/or the carbon footprint of each building of the multiple buildings for the structures that are given for the buildings in the 3D model.

In the energy simulation, it can be referred to the selection that has been provided in the initial step 200 to identify a regional location of the urban area. For this regional location a climate information is received, wherein the climate information comprises a definition of a solar orbit. Thus, it is known for what time and which angle the sun is shining onto the buildings of the urban area. Using the generated 3D model, it can be calculated whether and how long certain buildings or parts of certain buildings of the urban area are in the shadow of other buildings of the urban area. This allows to calculate a required for heating and cooling energy and is an indicator for an efficiency of integrated solar systems, such as solar thermal and photovoltaic systems. Therefore, the first energy simulation comprises a calculation of shadowed areas in the generated 3D model of the urban area, wherein the shaded areas are areas of buildings that are in the shade of a different building according to the solar orbit. The system 10 can simulate the available roof and facade areas for RES integration, based on the buildings' footprint and volumetrics and the shaded area and incorporate the benefits of RES energy production into the overall energy balance and carbon footprint analysis of the building.

Based on the 3D model, also surrounding structures of the buildings and their impact on the energy performance can be considered. Therefore, the surrounding structures are also added to the 3D model. For example, the map information comprises information about a building's surrounding structures, orientation, adjacency, and location. The surrounding structures have a significant influence on a building's shading, solar thermal gains, as well as its adjacency status with other buildings and its thermal losses.

Optionally, a set of data per building is generated by combining the first building attributes and the second building attributes of the corresponding building. This set of data can be used as an input for the simulation, for example with the EnergyPlus engine.

Once the first energy simulation has been completed, the results are indicated in an output step 107. The results are provided as an information that is indicating the expected energy usage of each building of the multiple buildings and/or a carbon footprint of each building of the multiple buildings according to the first energy simulation, and/or a total expected energy usage and/or a total carbon footprint of all buildings of the multiple buildings according to the first energy simulation. The information is provided via the internet connection 11 to the first client 1 that has been transmitting the initial request.

In case that the information that is indicating the expected energy usage of each building of the multiple buildings and/or a carbon footprint of each building of the multiple buildings according to the first energy simulation, it is preferable to graphically present the information. As the expected energy usage and/or the carbon footprint of each building is provided, the information might be presented by displaying the 3D model on the client 1, 2, 3 and by marking each building with a colour that is representative for the corresponding expected energy usage or carbon footprint of the corresponding building. The results are depicted based on specific colour palettes set for each results category. For example, the user chooses which results he/she wishes to see/visualize, let's say the building heights for the residential buildings of a specific part or of the whole area he/she is studying. In this case, the buildings appear by colour on a 3D map. Also graphs and charts are created along with the 3D depiction of the results.

The total expected energy usage and/or a total carbon footprint of all buildings of the multiple buildings can be calculated by adding the expected energy usage of all buildings of the multiple buildings and/or by adding the carbon footprint of all buildings. In case that the information that is indicating the total expected energy usage and/or a total carbon footprint of all buildings of the multiple buildings, the information might be provided as a numerical value or an indicator on a scale.

Thus, by sending a single selection from the client 1, 2, 3 to the server system 10, it is possible to receive information about an energy usage and/or a carbon footprint of an entire urban area. Based on this information, it can be considered whether steps should be initiated to optimize the energy usage and/or the carbon footprint for an urban area.

Accordingly, it is preferable that the method 100 comprises steps that allow a determination in respect to the efficiency of energy saving measures. For this purpose, the method 100 preferably comprises a sixth step 106 in which a second energy simulation based on the first building attributes of the multiple buildings and the sets of second building attributes that are assigned to the multiple buildings is performed. The second energy simulation essentially corresponds to the first energy simulation. The second energy simulation comprises a calculation of an expected energy usage of each building of the multiple buildings under consideration of an energy upgrade measure. The energy upgrade measures may be incorporated to the second energy simulation by changing the first building attributes or the second building attributes and by performing the first energy simulation with the changed building attributes. The sixth step 106 is optionally performed multiple times, wherein the sixth step 106 is performed for different energy upgrade measures. Therefore, a user is able to study whole retrofitting scenarios based on the minimum standards set by the national Energy Performance of Buildings Directive EPBD of each country or improved. Also the user can test a set of retrofitting actions (i.e. improvement of the whole building façade, replacement of the HVAC system and RES integration) or single measures (i.e. only replacement of windows).

Once the second energy simulation has been completed, the results are indicated in the output step 107. The results are provided as an information that is indicating the expected energy usage of each building of the multiple buildings and/or a carbon footprint of each building of the multiple buildings according to the second energy simulation, and/or a total expected energy usage and/or a total carbon footprint of all buildings of the multiple buildings according to the second energy simulation. The information is provided via the internet connection 11 to the client 1, 2, 3 that has been transmitting the initial request. The results of the second energy simulation can be provided in the same way as the results of the first energy simulation. This allows a comparison of the results and a determination of the considered energy upgrade measures on the energy usage and/or the carbon footprint of the urban area. The platform also offers the depiction of the comparison of the results for all retrofitting scenarios to each other and to the base case scenario.

An assessment in respect to the efficiency of different possible energy upgrade measures on the energy usage and/or a total carbon footprint of the urban area can be achieved by performing multiple second energy simulations based on the first building attributes of the multiple buildings and the sets of second building attributes that are assigned to the multiple buildings, wherein each of the second energy simulation comprises a calculation of an expected energy usage and/or a carbon footprint of each building of the multiple buildings under consideration of an energy upgrade measure, wherein different energy upgrade measures are applied for the second energy simulations, wherein the total expected energy usage and/or total carbon footprint of all buildings of the multiple buildings is calculated according to the first energy simulation and according to each one of the second energy simulations.

Each of the second energy simulation comprises a calculation of an expected energy usage of each building of the multiple buildings under consideration of an corresponding energy upgrade measure. The energy upgrade measures may be incorporated to each one of the second energy simulation by changing the first building attributes or the second building attributes for the respective second energy simulation. Each second energy simulation corresponds to performing the first energy simulation with the changed building attributes that correspond to the respective second energy simulation.

As a result, a total expected energy usage and/or total carbon footprint of all buildings of the multiple buildings is calculated is provided for each energy simulation. This allows to compare the energy usage and/or total carbon footprint of the entire urban area according to the first energy simulation, which is representative for the actual energy usage and/or total carbon footprint of the urban area with the energy usage and/or total carbon footprint of the same urban area when applying different measures for saving energy.

In the output step the energy upgrade measure that corresponds to the energy simulation that led to the smallest total expected energy usage of all buildings of the multiple buildings is indicated. The energy upgrade measure is a characteristic of one or more buildings that is defined by a second building attribute that has been changed in the second energy simulation when compared to the first energy simulation.

Thus, the claimed system is capable to work around the barrier of lack of high LOD (level of detail) data, so that it can be used in every city for which plain cartographic data (LOD0) is available.

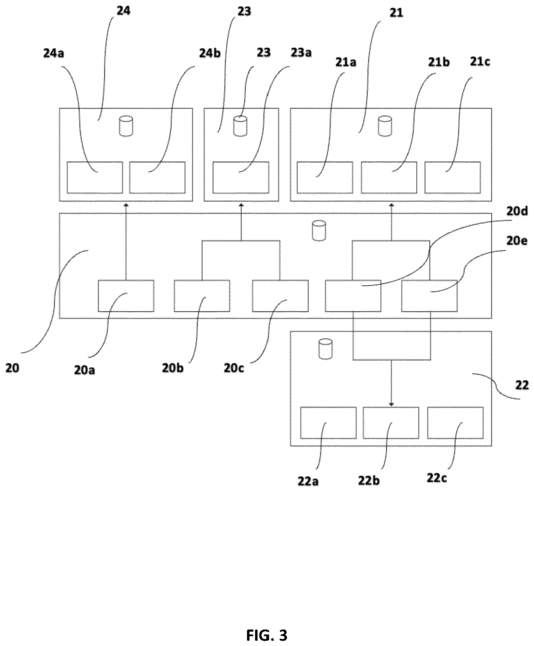

Figure 3 is depicting a structure of the databases that are utilized by the system 10 when executing the method 100. These databases comprise the map database 20 that stores the map information. In the map database 20, the locations of buildings are stored in a in a first partition 20a, the footprints of the buildings are stored in a in a second partition 20b, the height of the buildings are stored in a in a third partition 20c, the construction years of the buildings are stored in a in a fourth partition 20d and the usage types of the buildings are stored in a in a fifth partition 20e.

The databases that are utilized by the system 19 further comprise the building database. In the structure of the databases in Figure 3 the building database is structured into four sub databases, comprising a first sub database 21, a second sub database 22, a third sub database 23 and a fourth sub database 24.

The first sub database 21 comprises building statistics and technical data. In particular, the first sub database 21 comprises the envelope information of buildings in a first partition 21a and corresponding 3D models of buildings or parts of the buildings in a second and third partition 21b and 21c.

The second sub database 22 comprises country-specific technical instruction data. In particular, the second sub database 22 comprises building material data of buildings in a first partition 22a, the usage profile of buildings in a second partition 22b and the energy profile of the buildings in a third partition 22c. The building material data defines the building materials have been typically used for the building.

The third sub database 23 comprises modelling and representation data in a partition 23a. In particular, the third sub database 23 comprises 3D models a basic shapes of buildings for specific building footprints and building heights. It is noted that also the first sub database 21 comprises 3D models. As the 3D models do not necessary define entire buildings, the information of the different sub databases 21, 23 can be combined to model the building in the highest level of detail. For example, the second level of detail 202 (LOD2) is defined by the 3D models of the third sub database 23 and is enhanced by the 3D models of the first sub database 21 to model the buildings in the fourth level of detail 203 or LOD3.

The fourth sub database 24 comprises climate data. In particular, the fourth sub database 24 comprises information in regards to a solar orbit in a first partition 24a and climate conditions for different building locations in a second partition 24b.

The arrows in Figure 3 are indicating how the second building attributes can be selected based on first building attributes.

As can be understood from the above, the method 100 is providing a bottom-up approach that requires the same level of detail for each building unit that needs to be simulated. The required information that has to be used as an input for the energy plus simulation is preferably:
- Building form (footprint, height, projections)
- Building usage type
- Construction year
- Building envelope data (cross sections, construction materials, W/W ratio, dimensions and position of openings)
- Usage profile
- Electrical/Mechanical systems
- Surrounding structures, orientation, adjacency, and position.

Each one of these elements is advantageous for the accurate analysis of the buildings' energy profile. The required information is received from the map database or the building database.

The system 10 has a pan-European approach. It uses, analyses and incorporates into its database numerous of various information regarding (i) EU country-specific building data and (ii) map files. These data are in almost all cases not in the same form. The system is capable to structure the available data in a way that it can adjust/receive/digest/incorporate all of these different map files and statistical data information under the same umbrella.

The system 10 is therefore configured to perform a conversion process, which is illustrated in Figure 5.

A main engine 30 of the system 10 consists of multiple parts, which are grouped into one "engine" that can be broken down into three parts. These parts comprise an IDF Generator 32, which is configured to read all the values that are provided as input data 31 and create IDF files from the input data 31. The main engine 30 further comprises an Energy Simulation Service 33, for example EnergyPlus, which is configured to handle a simulation of the IDF files that are generated by the IDF Generator 3. The main engine 30 further comprises a database population service 34, for example a CSV Reader, which is configured to read the processed simulation files that are provided by the Energy Simulation Service 33 and to provide these processed simulation files as output data 35.

This structure would provide the option to create his own engine maybe using python/c# or other tools and generate the idf files. As long some guidelines are followed, the engine can be easily adapted and can be used to create the IDF files.

## Claims

1. Method (100) for optimizing an energy usage and/or a carbon footprint for an urban area, the method comprising:
receiving (101) map information that is related to the urban area, wherein the map information comprises first building attributes of each building of multiple buildings in the urban area, wherein the first building attributes comprises the footprint and the location of the corresponding building in the urban area;
receiving (104) multiple sets of second building attributes from a building database for each building of the multiple buildings, wherein each set of second building attributes defines a number of building attributes that lead to an impact on an energy performance of a building,
and assigning the received sets of the building attributes to the corresponding buildings of the multiple buildings that are located in the urban area;
performing (105) a dynamic first energy simulation for the multiple buildings based on the first building attributes and the second building attributes that are assigned to the multiple buildings, wherein the first energy simulation comprises a calculation of an expected energy usage and/or a carbon footprint of each building of the multiple buildings; and
providing (107) an information that is indicating the expected energy usage of each building of the multiple buildings and/or a carbon footprint of each building of the multiple buildings according to the first energy simulation, the expected energy usage of a group of buildings of the multiple buildings and/or a carbon footprint of a group of buildings of the multiple buildings according to the first energy simulation, and/or a total expected energy usage and/or a total carbon footprint of all buildings of the multiple buildings according to the first energy simulation.

2. Method according to claim 1, further comprising:
receiving (200) a user selection that defines the urban area, wherein the map information and the set of second building attributes that correspond to the selected urban area is received.

3. Method according to any one of the preceding claims, further comprising:
acquiring (110) the map information, wherein the map information is based on the urban area in reality to reflect the footprints of multiple buildings of the urban area in reality.

4. Method according to any one of the preceding claims, further comprising:
acquiring (111) the second building attributes for the building database, wherein the second building attributes are based on corresponding attributes of single buildings or groups of real buildings in the urban area in reality.

5. Method according to any one of the preceding claims, further comprising: generating (103) a 3D model of the urban area,
• wherein each building is generated to have the footprint (10, 11) that is indicated for the respective building in the first building attributes, and
• wherein each building is generated to have a height that is set according to a height value that is provided in the first building attributes for the respective building,
• wherein each building is generated to have a characteristic that is defined in the set of second building attributes that is assigned to the respective building;
wherein the first energy simulation comprises a calculation of the expected energy usage and/or a carbon footprint of each building of the multiple buildings for the structures that are given for the buildings in the 3D model.

6. Method according to claim 5, further comprising:
receiving a definition of a regional location of the urban area,
receiving climate information that is related to the regional location, wherein the climate information comprises a definition of a solar orbit,
wherein the first energy simulation comprises a calculation of shadowed areas in the generated 3D model of the urban area, wherein the shaded areas are areas of buildings that are in the shade of a different building according to the solar orbit.

7. Method according to claim 5 or 6, further comprising:
receiving a definition of a regional location of the urban area,
receiving climate information that is related to the regional location, wherein the climate information comprises a definition of a whether characteristic, wherein the weather characteristics define weather parameters that describe weather conditions,
wherein the first energy simulation comprises a calculation of the expected energy usage and/or a carbon footprint of each building of the multiple buildings based on the weather parameters.

8. Method according to any one of the preceding claims,
wherein the first building attributes comprise a definition of a construction year and/or a building usage type.

9. Method according to claim 8, further comprising
receiving the second building attributes for a building from the building database based on a construction year, a country in which the urban area is located and/or the building usage type that is defined for this building in the map data, wherein the second building attributes comprise regional information, wherein the regional information comprises information about:
• building materials that are typically used for construction of a building in the construction year and/or are typically used for construction of a building of the building usage type,
• a usage profile for a building, wherein the usage profile defines typical usage characteristics for a building in the construction year and/or defines typical usage characteristics for a building of the building usage type, and/or
• internal gains and ventilation profiles that typically apply for a building of the building usage type and/or the building usage type, and
• an envelope information, wherein the envelope information defines a building envelope of a building that typically applies;
performing the first energy simulation based on the regional information.

10. Method according to any one of the preceding claims, wherein the second building attributes comprise:
a usage profile, wherein the usage profile defines a characteristic that describes a usage of a building;
an envelope information, wherein the envelope information defines a building envelope of a building;
an energy profile, wherein the energy profile defines an energy usage of a building, and/or
a system profile, wherein the system profile defines the electrical and mechanical systems that are provided in a building.

11. Method according to any one of the preceding claims, wherein the set of second building attributes is assigned to the respective building of the multiple buildings based on the first set of building attributes.

12. Method according to any one of the preceding claims, further comprising:
performing (106) a second energy simulation based on the first building attributes of the multiple buildings and the sets of second building attributes that are assigned to the multiple buildings, wherein the second energy simulation comprises a calculation of an expected energy usage of each building of the multiple buildings under consideration of an energy upgrade measure, and providing an information that is indicating
the expected energy usage of each building of the multiple buildings and/or a carbon footprint of each building of the multiple buildings according to the second energy simulation, and/or a total expected energy usage and/or a total carbon footprint of all buildings of the multiple buildings according to the second energy simulation.

13. Method according to any one of the preceding claims, further comprising:
performing multiple second energy simulations based on the first building attributes of the multiple buildings and the sets of second building attributes that are assigned to the multiple buildings, wherein each of the second energy simulation comprises a calculation of an expected energy usage and/or a carbon footprint of each building of the multiple buildings under consideration of an energy upgrade measure, wherein different energy upgrade measures are applied for the second energy simulations, wherein the total expected energy usage and/or total carbon footprint of all buildings of the multiple buildings is calculated according to the first energy simulation and according to each one of the second energy simulations, and
providing the energy upgrade measure that corresponds to the energy simulation that led to the smallest total expected energy usage and/or smallest total carbon footprint of all buildings of the multiple buildings.

14. System (10) for optimizing an energy usage for an urban area that is configured to:
receive (101) map information that is related to the urban area, wherein the map information comprises first building attributes of each building of multiple buildings in the urban area,
wherein the first building attributes comprises a footprint (10, 11) and a location of the corresponding building in the urban area;
receive (104) a set of second building attributes from a building database (12) for each building of the multiple buildings, wherein the each set of second building attributes defines a number of building attributes that lead to an impact on an energy performance of a building;
assign (105) the received sets of the building attributes to the corresponding buildings of the multiple buildings that are located in the urban area;
perform (106) a dynamic first energy simulation for the multiple buildings based on the first building attributes and the second building attributes that are assigned to the multiple buildings, wherein the first energy simulation comprises a calculation of an expected energy usage of each building of the multiple buildings; and
provide (107) an information that is indicating
the expected energy usage of each building of the multiple buildings and/or a carbon footprint of each building of the multiple buildings according to the first energy simulation,
the expected energy usage of a group of buildings of the multiple buildings and/or a carbon footprint of a group of buildings of the multiple buildings according to the first energy simulation, and/or
a total expected energy usage and/or a total carbon footprint of all buildings of the multiple buildings according to the first energy simulation.
